(19) Europäisches Patentamt / European Patent Office / Office européen des brevets

(11) **EP 2 721 729 B1**

(12) **FASCICULE DE BREVET EUROPEEN**

(45) Date de publication et mention
de la délivrance du brevet:
**12.09.2018 Bulletin 2018/37**

(21) Numéro de dépôt: **12731539.8**

(22) Date de dépôt: **07.06.2012**

(51) Int Cl.:
*H02P 25/024* *(2016.01)*   *H02P 21/22* *(2016.01)*
*H02P 21/00* *(2016.01)*   *H02P 21/06* *(2016.01)*
*H02P 25/02* *(2016.01)*

(86) Numéro de dépôt international:
**PCT/FR2012/051277**

(87) Numéro de publication internationale:
**WO 2012/172237 (20.12.2012 Gazette 2012/51)**

(54) **PROCEDE ET DISPOSITIF DE COMMANDE D'UN GROUPE MOTOPROPULSEUR ELECTRIQUE A COMMANDES DECOUPLEES**

VERFAHREN UND VORRICHTUNG ZUR STEUERUNG EINES ELEKTROMOTORANTRIEBSEINHEIT MIT ENTKOPPELTEN STEUERUNGEN

METHOD AND DEVICE FOR CONTROLLING A ELECTRIC MOTOR PROPULSION UNIT WITH DECOUPLED CONTROLS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.06.2011 FR 1155219**

(43) Date de publication de la demande:
**23.04.2014 Bulletin 2014/17**

(73) Titulaire: **Renault S.A.S.**
**92100 Boulogne-Billancourt (FR)**

(72) Inventeurs:
• **MALOUM, Abdelmalek**
  **F-94550 Chevilly Larue (FR)**
• **KETFI-CHERIF, Ahmed**
  **F-78990 Elancourt (FR)**

(74) Mandataire: **Rougemont, Bernard**
**Renault s.a.s**
**TCR GRA 2 36 - Sce 00267**
**1, Avenue du Golf**
**78084 Guyancourt Cedex (FR)**

(56) Documents cités:
**EP-A1- 0 798 848**   **EP-A2- 0 943 481**
**EP-A2- 1 187 307**   **JP-A- 8 242 600**
**US-A1- 2002 175 649**

EP 2 721 729 B1

## Description

L'invention a pour domaine technique la commande des moteurs électriques, et en particuliers le domaine des moteurs électriques de type synchrone à rotor bobiné.

Un moteur électrique de type synchrone à rotor bobiné comprend une partie fixe appelée stator et une partie mobile appelée rotor. Le stator comprend trois bobines décalées de 120° et alimentées en courant alternatif. Le rotor comprend une bobine alimentée en courant continu.

Les courants des phases du stator dépendent des résistances et inductances du rotor et du stator ainsi que de l'inductance mutuelle entre le rotor et le stator.

Un but de la présente invention est d'améliorer la qualité de régulation des courants d'un moteur électrique de type synchrone à rotor bobiné, que peut atteindre un régulateur de l'état de l'art.

Selon un mode de mise en oeuvre, on définit un procédé de commande d'un système comprenant un moteur électrique muni d'un rotor et d'un stator, des capteurs de mesure des courants circulants dans le rotor et dans le stator, des moyens de détermination de consignes de courant et des moyens de traitement des signaux issus des capteurs de mesure, caractérisé par le fait qu'il comprend des étapes au cours desquelles :

on détermine des signaux intermédiaires par une transformation selon laquelle des tensions statoriques et rotoriques du moteur électrique sont exprimées dans un référentiel découplé en fonction des signaux reçus des moyens de traitement, et

on détermine, en fonction des signaux intermédiaires obtenus par transformation, des signaux de régulation en tension en fonction des courants circulants dans le rotor et dans le stator du moteur électrique satisfaisant les consignes de courant. Celles-ci traduisent une consigne de couple.

Le procédé de commande a pour avantage un découplage total entre les variations de courant du rotor et les variations de courant du stator permettant un suivi de consigne de couple à la roue amélioré.

Ce découplage est beaucoup moins complexe que le découplage effectué dans les dispositifs de compensation classiques de couplage travaillant dans le repère de Park.

Le procédé de commande peut comprendre une étape dans laquelle on sature les signaux de régulation en tension pour satisfaire les contraintes liées à une batterie équipant un véhicule automobile et connectée au moteur électrique.

Le procédé de commande peut comprendre une étape dans laquelle on détermine des limites d'intégration en appliquant une transformation inverse auxdits signaux de régulation en tension saturés, les limites d'intégration s'appliquant à la détermination de nouveaux signaux intermédiaires après ladite transformation inverse.

Le procédé de commande peut comprendre une étape dans laquelle on assure la continuité des commandes en limitant les variations des commandes effectivement transmises aux actionneurs.

Selon un autre mode de mise en oeuvre, on définit un système de commande d'un moteur électrique muni d'un rotor et d'un stator, comprenant des capteurs de mesure de courants circulants dans le rotor et dans le stator et des moyens de détermination de consignes de courant, caractérisé par le fait qu'il comprend :

un moyen de traitement des mesures et des requêtes connecté en entrée aux capteurs de mesure et aux moyens de détermination de consignes de courant,

un moyen de transformation fournissant des signaux intermédiaires après une transformation selon laquelle des tensions statoriques et rotoriques du moteur électrique sont exprimées dans un référentiel découplé, connecté en entrée au moyen de traitement des mesures et des requêtes,

un moyen de détermination connecté en entrée au moyen de transformation, le moyen de détermination étant apte à émettre des signaux de régulation en tension du moteur électrique satisfaisant les consignes de courant.

Le système de commande peut comprendre un saturateur des signaux de régulation en tension reçus du moyen de détermination.

Le système de commande peut comprendre un moyen de transformation inverse des signaux de régulation en tension saturés reçus du saturateur.

Le système de commande peut comprendre un moyen de traitement des sorties des signaux de régulation en tension saturés reçus du saturateur.

D'autres buts, caractéristiques et avantages apparaîtront à la lecture de la description suivante donnée uniquement en tant qu'exemple non limitatif et faite en référence aux dessins annexés sur lesquels :

- la figure 1 illustre un procédé de commande d'un groupe motopropulseur électrique, et
- la figure 2 illustre un dispositif de commande d'un groupe motopropulseur électrique.

La régulation des courants d'un moteur synchrone à rotor bobiné présente des difficultés du fait de la synchronisation des courants sinusoïdaux du stator avec la rotation du moteur et au couplage dynamique entre le rotor et le stator.

Pour cela, on dispose d'un onduleur permettant de commander la tension des phases du stator et d'un hacheur pour commander la tension du rotor.

Plutôt que d'utiliser des consignes sinusoïdales, on utilise la transformée de Park pour pouvoir réguler des signaux constants. Les signaux de régulation du stator dans le repère de Park sont notés $V_d$, $V_q$. Le signal de régulation du rotor est noté $V_f$.

De façon connue, on a les égalités suivantes :

$$V_d = R_s I_d + L_d \frac{dI_d}{dt} + M_f \frac{dI_f}{dt} - \omega_r L_q I_q \qquad (Eq.\ I)$$

$$V_q = R_s I_q + L_q \frac{dI_q}{dt} + \omega_r \left( L_d I_d + M_f I_f \right) \qquad (Eq.\ II)$$

$$V_f = R_f I_f + L_f \frac{dI_f}{dt} + \alpha M_f \frac{dId}{dt} \qquad (Eq.\ III)$$

Dans les équations (I) et (III), on remarque bien que :

- Vd dépend de la variation de courant $I_d$, de la variation de courant $I_f$ (couplage dynamique), et des courants $I_d$ et $I_q$
- Vf dépend de la variation de courant $I_d$, de la variation de courant $I_f$ (couplage dynamique) et du courant $I_f$.

La dépendance de Vd et de Vf de ces variations de courants (couplage dynamique) est gênante d'un point de vue du contrôle- car une variation de Vd ou de Vf engendrera une variation sur le courant $I_d$ et sur le courant $I_f$, ce qui rend leur contrôle couplé.

Afin de s'affranchir de ce couplage dynamique entre la variation de courant $I_d$ et la variation de courant $I_f$, on effectue un changement de variables, pour exprimer les tensions statoriques et rotorique dans un référentiel découplé, c'est-à-dire dans lequel la variation du courant $I_i$ ne dépend que d'une seule tension $\tilde{V}_j$, avec i un indice égal à d,q ou f et j un indice égal à x,y ou z.

Après ce changement de variables : $(\tilde{V}_x, \tilde{V}_y, \tilde{V}_z) = f(V_d, V_q, V_f)$, le système à contrôler peut alors être représenté par les équations suivantes :

$$
\begin{aligned}
\tilde{V}_x &= R_s I_d + L_d \frac{dI_d}{dt} - \omega_r L_q I_q \\
\tilde{V}_y &= R_s I_q + L_q \frac{dI_q}{dt} + \omega_r \left( L_d I_d + M_f I_f \right) \qquad (Eq.\ 1) \\
\tilde{V}z &= R_f I_f + L_f \frac{dI_f}{dt} - \frac{3M_f}{2L_d} \left( R_s I_d - \omega_r L_q I_q \right)
\end{aligned}
$$

Avec :

$\tilde{V}_x$ : Nouvelle tension statorique dans le référentiel découplé de l'axe d.

$\tilde{V}_y$ : Nouvelle tension statorique dans le référentiel découplé de l'axe q .

$\tilde{V}_z$ : Nouvelle tension rotorique dans le référentiel découplé de l'axe f.

$L_d$ : Inductance équivalente d'induit sur l'axe d, c'est-à-dire sur l'axe polaire du repère de Park.

$L_q$ : Inductance équivalente d'induit sur l'axe q, c'est-à-dire sur l'axe interpolaire ou transversal du repère de Park.

$L_f$ : Inductance du rotor.

$R_s$ : Résistance équivalente d'enroulements statoriques.

$R_f$ : Résistance du rotor.

$M_f$ : Mutuelle inductance entre le stator et le rotor.

$I_d$ : Courant stator sur l'axe d, c'est-à-dire sur l'axe polaire du repère de Park.

$I_q$ : Courant stator sur l'axe q, c'est-à-dire sur l'axe interpolaire ou transversal du repère de Park.

$I_f$ : Courant du rotor.

$\omega_r$ : Vitesse de rotation.

Les valeurs $L_d$, $L_q$, $L_f$, $R_s$, $R_f$ et $M_f$ sont connues par des mesures préalables.

Les principales difficultés que présente ce type de système résident dans le couplage dynamique entre les axes d et f, la variation difficilement identifiable des paramètres, et enfin les contraintes de tension de la batterie d'alimentation.

Les contraintes de tension sont les suivantes :

$$V_d^2 + V_q^2 \quad \leq \quad \frac{V_{bat}^2}{3}$$
$$0 \quad \leq V_f \leq \quad V_{bat} \qquad (Eq.\ 2)$$

Avec $V_{bat}$ : la tension de la batterie

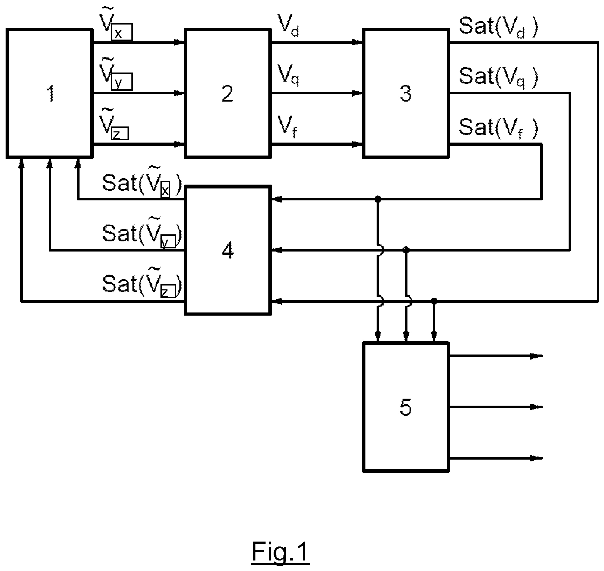

Le procédé de commande illustré sur la figure 1 permet de contrôler les courants $I_d$, $I_q$ et $I_f$ pour satisfaire les demandes en couple à la roue. Pour cela, des mesures filtrées et mises à l'échelle ainsi que des consignes de référence en courant (qui traduisent la consigne en couple) que le régulateur doit atteindre sont disponibles.

Dans une première étape 1, dans le référentiel découplé, on réalise la synthèse du régulateur qui est de la forme suivante :

$$\tilde{V}_x \quad = \quad K_d\left(I_d^{ref} - I_d\right) + K_{id}\int\left(I_d^{ref} - I_d\right)$$
$$\tilde{V}_y \quad = \quad K_q\left(I_q^{ref} - I_q\right) + K_{iq}\int\left(I_q^{ref} - I_q\right) \qquad (Eq.\ 3)$$
$$\tilde{V}_z \quad = \quad K_f\left(I_f^{ref} - I_f\right) + K_{if}\int\left(I_f^{ref} - I_f\right)$$

Avec $I_d^{ref}$ : le courant stator de référence sur l'axe d. $I_q^{ref}$ : le courant stator de référence sur l'axe q. $I_f^{ref}$ : le courant du rotor de référence

$K_d$, $K_q$, $K_f$, $K_{id}$, $K_{iq}$, $K_{if}$ : des paramètres de réglage.

La synthèse du régulateur est donc effectuée dans le référentiel découplé et non dans le référentiel de Park.

Les courants $I_d^{ref}$, $I_q^{ref}$ et $I_f^{ref}$ sont des courants de consignes, issus des moyens de traitement 6. L'égalité (Eq. 1) = (Eq.3) permet de déterminer les paramètres de réglage $K_d$, $K_q$, $K_f$, $K_{id}$, $K_{iq}$, $K_{if}$.

Comme on peut le voir, le régulateur permet de déterminer une tension selon un axe x ($\tilde{V}_x$) ne dépendant que des variations de courant de l'axe d ($I_d$). De même, la tension selon un axe y ($\tilde{V}_y$) et la tension selon un axe z ($\tilde{V}_z$) ne dépendent respectivement que des variations de courant de l'axe q ($I_q$) et du rotor ($I_f$). Les couplages sont donc minimisés au niveau du régulateur.

Les signaux en tension exprimés dans cette nouvelle base ($\tilde{V}_x$, $\tilde{V}_y$, $\tilde{V}_z$) sont des signaux intermédiaires. Afin d'avoir accès aux valeurs réelles, une transformation inverse est nécessaire. Pour cela, au cours d'une deuxième étape 2, on calcule les signaux de régulation en tension effectivement appliqués au système :

$$V_d \quad = \quad \tilde{V}_x + \frac{M_f}{L_d}\left(\tilde{V}_z - R_f I_f + \frac{3M_f}{2L_d}\left(R_s I_d - \omega_r L_q I_q\right)\right)$$
$$V_q \quad = \quad \tilde{V}_y \qquad (Eq.\ 4)$$
$$V_f \quad = \quad \tilde{V}_z + \frac{3M_f}{2L_d}\tilde{V}_x$$

On détermine ainsi les signaux de régulation en tension Vd, Vq, Vf en fonction des signaux intermédiaires, des valeurs des paramètres physiques du moteur (inductances, résistances,...) et des courants circulant dans le moteur ($I_d$, $I_q$, $I_f$).

Dans une troisième étape 3, on sature les signaux de régulation en tension calculés à la deuxième étape pour satisfaire les contraintes liées à la batterie (en satisfaisant l'équation 2).

Dans une quatrième étape 4, on détermine des limites d'intégration en inversant les signaux de régulation saturés calculés à la troisième étape par application d'une matrice inversée par rapport à la matrice de l'équation 4. Les limites d'intégration sont ainsi exprimées dans le formalisme du référentiel découplé $\tilde{V}_x$, $\tilde{V}_y$, $\tilde{V}_z$. Les limites d'intégration sont ensuite prises en compte au niveau de l'étape 1 afin de limiter les intégrations des deuxièmes termes de l'équation 3. Les intégrations sont stoppées lorsque les valeurs $\tilde{V}_x$, $\tilde{V}_y$, $\tilde{V}_z$ dépassent les valeurs saturées de $\tilde{V}_x$, $\tilde{V}_y$, $\tilde{V}_z$ obtenues à l'étape 4.

Une cinquième étape 5 assure la continuité des commandes en limitant les variations de ces dernières. Après l'étape 5, les valeurs de tensions simples U, V, W sinusoïdales sont calculées (transformée de Park inverse) et servent de tensions à appliquer au système réel.

Le procédé de commande obtenu est performant d'un point de vue de la fiabilité et robuste vis-à-vis des perturbations.

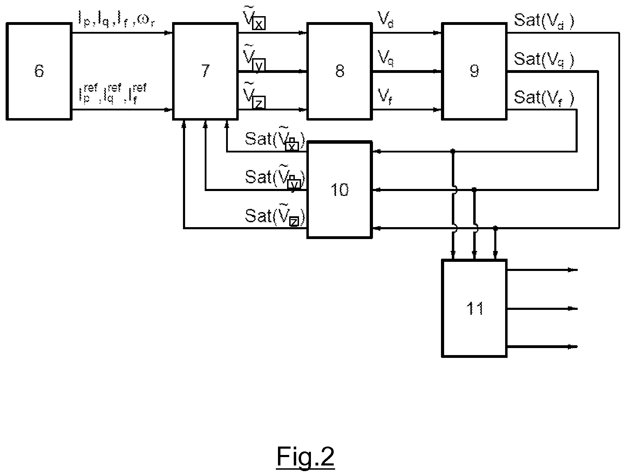

Sur la figure 2, on peut voir un dispositif de commande comprenant un moyen de traitement 6 des mesures et des requêtes, apte à filtrer et mettre à l'échelle des signaux reçus de capteurs, par exemple de capteurs des courants $I_d$, $I_q$ et $I_f$.

Le moyen de traitement 6 est relié en sortie au moyen de transformation 7 permettant de déterminer les signaux $\tilde{V}_x$, $\tilde{V}_y$, $\tilde{V}_z$, c'est-à-dire les signaux intermédiaires. Le moyen de transformation 7 applique l'équation 3 et l'équation 1.

Le moyen de transformation 7 est relié en sortie à un moyen de détermination 8 apte à déterminer les signaux de régulation en tension $V_d$, $V_q$, $V_f$ en fonction des signaux intermédiaires $\tilde{V}_x$, $\tilde{V}_y$, $\tilde{V}_z$. Le moyen de détermination 8 applique l'équation 4.

Le moyen de détermination 8 est relié en sortie à un saturateur 9 qui est apte à limiter les signaux de régulation en tension $V_d$, $V_q$, $V_f$ en fonction de l'équation 2.

Le saturateur 9 est relié en sortie à un moyen d'inversion 10 et à un moyen de traitement des sorties 11.

Le moyen d'inversion 10 est apte à déterminer des signaux intermédiaires saturés en fonction des signaux de régulation en tension saturés reçus du saturateur 9. Pour cela, le moyen d'inversion 10 applique une matrice inverse de la matrice de l'équation 4. Les signaux intermédiaires saturés sont ensuite transmis au moyen de transformation 7.

Le moyen de traitement des sorties 11 est apte à limiter la variation des signaux de régulation en tension saturés transmis aux actionneurs entre deux cycles de calcul de façon que les stress mécaniques et à-coups de fonctionnement soient limités.

## Revendications

1. Procédé de commande d'un système comprenant un moteur électrique muni d'un rotor et d'un stator, des capteurs de mesure des courants circulants dans le rotor et dans le stator, des moyens de détermination de consignes de courant et des moyens de traitement (6) des signaux issus des capteurs de mesure, **caractérisé par le fait qu'**il comprend des étapes au cours desquelles :

   on détermine des signaux intermédiaires par une transformation selon laquelle des tensions statoriques et rotoriques du moteur électrique sont exprimées dans un référentiel découplé en fonction des signaux reçus des moyens de traitement (6), la variation d'un courant $I_d$, $I_q$ ou $I_f$ ne dépendant d'une tension que sur un seul axe dudit référentiel découplé, $I_d$ étant le courant statorique sur l'axe polaire du repère de Park, $I_q$ étant le courant statorique sur l'axe interpolaire ou transversal du repère de Park, et $I_f$ étant le courant rotorique, et on détermine, en fonction des signaux intermédiaires obtenus par transformation, des signaux de régulation en tension en fonction des courants circulants dans le rotor et dans le stator du moteur électrique satisfaisant les consignes de courant, lesdits signaux de régulation étant déterminés dans ledit référentiel découplé.

2. Procédé de commande selon la revendication 1, comprenant une étape dans laquelle on sature les signaux de régulation en tension pour satisfaire les contraintes liées à une batterie équipant un véhicule automobile et connectée au moteur électrique.

3. Procédé de commande selon la revendication 2, comprenant une étape dans laquelle on détermine des limites d'intégration en appliquant une transformation inverse auxdits signaux de régulation en tension saturés, les limites d'intégration s'appliquant à la détermination de nouveaux signaux intermédiaires après ladite transformation inverse.

**4.** Procédé de commande selon la revendication 3, comprenant une étape dans laquelle on assure la continuité des commandes en limitant les variations de ces commandes.

**5.** Système de commande d'un moteur électrique muni d'un rotor et d'un stator, comprenant des capteurs de mesure de courants circulants dans le rotor et dans le stator et des moyens de détermination de consignes de courant, **caractérisé par le fait qu'**il comprend :

> un moyen de traitement (6) des mesures et des requêtes connecté en entrée aux capteurs de mesure et aux moyens de détermination de consignes de courant,
> un moyen de transformation (7) fournissant des signaux intermédiaires après une transformation selon laquelle des tensions statoriques et rotoriques du moteur électrique sont exprimées dans un référentiel découplé, connecté en entrée au moyen de traitement (6) des mesures et des requêtes, la variation d'un courant $I_d$, $I_q$ ou $I_f$ ne dépendant d'une tension que sur un seul axe dudit référentiel découplé, $I_d$ étant le courant statorique sur l'axe polaire du repère de Park, $I_q$ étant le courant statorique sur l'axe interpolaire ou transversal du repère de Park, et $I_f$ étant le courant rotorique,
> et un moyen de détermination (8) connecté en entrée au moyen de transformation (7), le moyen de détermination(8) étant apte à émettre des signaux de régulation en tension du moteur électrique satisfaisant les consignes de courant lesdits signaux de régulation étant déterminés dans ledit référentiel découplé.

**6.** Système de commande selon la revendication 5, comprenant un saturateur (9) des signaux de régulation en tension reçus du moyen de détermination (8).

**7.** Système de commande selon la revendication 6, comprenant un moyen de transformation inverse (10) des signaux de régulation en tension saturés reçus du saturateur (9).

**8.** Système de commande selon la revendication 7, comprenant un moyen de traitement (11) des sorties des signaux de régulation en tension saturés reçus du saturateur (9).


**Patentansprüche**

**1.** Verfahren zur Steuerung eines Systems, das einen mit einem Rotor und einem Stator versehenen Elektromotor, Sensoren zur Messung der im Rotor und im Stator fließenden Ströme, Mittel zur Bestimmung von Stromsollwerten und Mittel zur Verarbeitung (6) der von den Messsensoren ausgegebenen Signale umfasst, **dadurch gekennzeichnet, dass** es Schritte umfasst, in denen:

> Zwischensignale durch eine Transformation bestimmt werden, gemäß der Stator- und Rotorspannungen des Elektromotors in einem entkoppelten Bezugssystem in Abhängigkeit von den von den Verarbeitungsmitteln (6) empfangenen Signalen ausgedrückt werden, wobei die Änderung eines Stroms $I_d$, $I_q$ oder $I_f$ von einer Spannung nur auf einer einzigen Achse dieses entkoppelten Bezugssystems abhängt, wobei $I_d$ der Statorstrom auf der Polarachse des Park-Koordinatensystems ist, $I_q$ der Statorstrom auf der Interpolar- oder Querachse des Park-Koordinatensystems ist und $I_f$ der Rotorstrom ist,
> und, in Abhängigkeit von den durch Transformation erhaltenen Zwischensignalen, Spannungsregelungssignale in Abhängigkeit von den im Rotor und im Stator des Elektromotors fließenden Strömen, welche die Stromsollwerte erfüllen, bestimmt werden, wobei diese Regelungssignale in dem entkoppelten Bezugssystem bestimmt werden.

**2.** Steuerungsverfahren nach Anspruch 1, welches einen Schritt umfasst, in welchem die Spannungsregelungssignale gesättigt werden, um die Nebenbedingungen zu erfüllen, die mit einer Batterie zusammenhängen, mit der ein Kraftfahrzeug ausgerüstet ist und die mit dem Elektromotor verbunden ist.

**3.** Steuerungsverfahren nach Anspruch 2, welches einen Schritt umfasst, in welchem Integrationsgrenzen unter Anwendung einer inversen Transformation auf die gesättigten Spannungsregelungssignale bestimmt werden, wobei die Integrationsgrenzen auf die Bestimmung neuer Zwischensignale nach dieser inversen Transformation angewendet werden.

**4.** Steuerungsverfahren nach Anspruch 3, welches einen Schritt umfasst, in welchem die Kontinuität der Steuerungsbefehle sichergestellt wird, indem die Veränderungen dieser Steuerungsbefehle begrenzt werden.

**5.** System zur Steuerung eines mit einem Rotor und einem Stator versehenen Elektromotors, welches Sensoren zur Messung der im Rotor und im Stator fließenden Ströme und Mittel zur Bestimmung von Stromsollwerten umfasst, **dadurch gekennzeichnet, dass** es umfasst:

ein Mittel zur Verarbeitung (6) der Messwerte und der Anforderungen, das am Eingang mit den Messsensoren und mit den Mitteln zur Bestimmung von Stromsollwerten verbunden ist,
ein Transformationsmittel (7), welches Zwischensignale nach einer Transformation liefert, gemäß der Stator- und Rotorspannungen des Elektromotors in einem entkoppelten Bezugssystem ausgedrückt werden, und welches am Eingang mit dem Mittel zur Verarbeitung (6) der Messwerte und der Anforderungen verbunden ist, wobei die Änderung eines Stroms $I_d$, $I_q$ oder $I_f$ von einer Spannung nur auf einer einzigen Achse dieses entkoppelten Bezugssystems abhängt, wobei $I_d$ der Statorstrom auf der Polarachse des Park-Koordinatensystems ist, $I_q$ der Statorstrom auf der Interpolar- oder Querachse des Park-Koordinatensystems ist und $I_f$ der Rotorstrom ist,
und ein Bestimmungsmittel (8), das am Eingang mit dem Transformationsmittel (7) verbunden ist, wobei das Bestimmungsmittel (8) in der Lage ist, Signale zur Spannungsregelung des Elektromotors zu übermitteln, welche die Stromsollwerte erfüllen, wobei diese Regelungssignale in dem entkoppelten Bezugssystem bestimmt werden.

**6.** Steuerungssystem nach Anspruch 5, welches einen Sättiger (9) für die Spannungsregelungssignale, die von dem Bestimmungsmittel (8) empfangen werden, umfasst.

**7.** Steuerungssystem nach Anspruch 6, welches ein Mittel zur inversen Transformation (10) der gesättigten Spannungsregelungssignale, die von dem Sättiger (9) empfangen werden, umfasst.

**8.** Steuerungssystem nach Anspruch 7, welches ein Mittel zur Verarbeitung (11) der Ausgänge der gesättigten Spannungsregelungssignale, die von dem Sättiger (9) empfangen werden, umfasst.

**Claims**

**1.** Method for controlling a system comprising an electric motor equipped with a rotor and with a stator, sensors for measuring the currents flowing in the rotor and in the stator, means for determining current setpoints and means (6) for processing the signals coming from the measurement sensors, **characterized in that** it comprises steps during which:

intermediate signals are determined by a transform in which stator and rotor voltages of the electric motor are expressed in a decoupled reference frame as a function of the signals received from the processing means (6), the variation in a current $I_d$, $I_q$ or $I_f$ depending only on a voltage on just one axis of said decoupled reference frame, $I_d$ being the stator current on the polar axis of the Park reference frame, $I_q$ being the stator current on the interpolar or transverse axis of the Park reference frame, and $I_f$ being the rotor current, and, as a function of the intermediate signals obtained by transformation, voltage control signals are determined as a function of the currents flowing in the rotor and in the stator of the electric motor that satisfy the current setpoints, said control signals being determined in said decoupled reference frame.

**2.** Control method according to Claim 1, comprising a step in which the voltage control signals are saturated in order to satisfy the constraints linked to a battery fitted on a motor vehicle and connected to the electric motor.

**3.** Control method according to Claim 2, comprising a step in which bounds of integration are determined by applying an inverse transform to said saturated voltage control signals, the bounds of integration applying to the determination of new intermediate signals after said inverse transform.

**4.** Control method according to Claim 3, comprising a step in which the continuity of the commands is ensured by limiting the variations in these commands.

**5.** System for controlling an electric motor equipped with a rotor and with a stator, comprising sensors for measuring currents flowing in the rotor and in the stator and means for determining current setpoints, **characterized in that** it comprises:

a means (6) for processing measurements and requests, connected at input to the measurement sensors and to the means for determining current setpoints,

a transformation means (7) supplying intermediate signals after a transform in which stator and rotor voltages of the electric motor are expressed in a decoupled reference frame, connected at input to the means (6) for processing measurements and requests, the variation in a current $I_d$, $I_q$ or $I_f$ depending only on a voltage on just one axis of said decoupled reference frame, $I_d$ being the stator current on the polar axis of the Park reference frame, $I_q$ being the stator current on the interpolar or transverse axis of the Park reference frame, and $I_f$ being the rotor current,

and a determination means (8) connected at input to the transformation means (7), the determination means (8) being able to emit voltage control signals for the electric motor that satisfy the current setpoints, said control signals being determined in said decoupled reference frame.

6. Control system according to Claim 5, comprising a saturator (9) for the voltage control signals received from the determination means (8)

7. Control system according to Claim 6, comprising a means (10) for inverse transformation of the saturated voltage control signals received from the saturator (9).

8. Control system according to Claim 7, comprising a means (11) for processing the outputs of the saturated voltage control signals received from the saturator (9).

$$\underline{Fig.1}$$

$$\underline{\text{Fig.2}}$$